# EUROPEAN PATENT SPECIFICATION

(11) **EP 3 035 769 B1**
(45) Date of publication and mention of the grant of the patent: **08.11.2017**
(21) Application number: 14307043.1
(22) Date of filing: 16.12.2014
(51) Int. Cl.: H04W 76/06

(54) **METHOD AND APPARATUS FOR RELEASING PRE-RESERVED RADIO RESOURCES**
VERFAHREN UND VORRICHTUNG ZUR FREISETZUNG VON VORRESERVIERTEN FUNKRESSOURCEN
PROCÉDÉ ET APPAREIL POUR LIBÉRER LE CHAMP DE RESSOURCES RADIO PRÉ-RÉSERVÉES

(43) Date of publication of application: 22.06.2016
(73) Proprietor: ALCATEL LUCENT, 92100 Boulogne-Billancourt (FR)
(72) Inventor: Saur, Stephan, 70435 Stuttgart (DE); Valentin, Stefan, 70435 Stuttgart (DE)
(74) Representative: Mooij, Maarten

(56) References cited:
- EP-A2- 0 892 571
- WO-A1-2013/135904

## Description

### FIELD OF THE INVENTION

The present invention relates to a method and apparatus for releasing pre-reserved radio resources.

### BACKGROUND OF THE INVENTION

This section introduces aspects that may be helpful in facilitating a better understanding of the invention. Accordingly, the statements of this section are to be read in this light and are not to be understood as admission about what is in the prior art.

Within the wide field of Machine-to-Machine (M2M) communications, e.g. car-to-car, car-to-infrastructure, industrial automation and processing, requirements on high reliability and low latency are key requirements defining the usability of an application. In mission critical applications as described above, end-to-end delays in the range of 10 ms or even below have to be achieved.

Cellular solutions are preferred for the above mentioned use cases due to ubiquitous availability and coverage. However, cellular radio standards like Long Term Evolution (LTE) are not designed to achieve such low latencies. Current cellular networks like LTE do not provide adequate latencies for mission critical use cases due to extensive signaling exchange required to set-up a connection, to synchronize and to allocate radio resources for the transmission of the actual payload in uplink.

A straightforward solution to avoid signaling exchange between the network and the M2M device for the dynamic allocation of radio resources is simply a pre-reservation of radio resources for the device. In other words, a sub-set of radio resources, typically a frequency sub-channel in a FDMA or OFDMA system, a fraction of transmission time or a code in a CDMA system is permanently reserved for one particular device, independent whether or not the device has actually data to transmit. Such a pre-reservation scheme can achieve very low latencies because the transmission on the pre-reserved sub-channel or code can immediately start after a new data packet is ready for transmission without risking reception errors due to interference from other devices of the same technology. Pre-reservation is applicable in an isolated, local sensor network with a known number of devices and a sufficient dimensioning of the radio system, i.e. the number of known devices corresponds to the number of available frequency sub-channels or codes.

However such a pre-reservation scheme has a very low spectral efficiency and is thus not applicable in cellular radio systems. As many use cases in M2M, sensoring and industry automation and control generate discontinuous and sparse traffic load, a large share of the pre-reserved radio resources remains unused for a substantial fraction of time.

Alternative solutions are randomized medium access control (MAC) schemes such as random access or random back-off techniques. These schemes do not rely on reserving radio resource before an initial transmit. Pure random access protocols, e.g. slotted ALOHA, directly transmit. Carrier sensing strategies such as carrier sense multiple access (CSMA), either physically and/or virtually test the medium before transmitting and issue a random back-off to avoid collisions with ongoing transmissions.
The common problem of all randomized MAC schemes is their significant and potentially unbounded transmission delay that depends on the traffic load. without reservation, random access protocols suffer from collisions if two devices transmit at the same time and channel resource. Such collisions likely lead to decoding errors and packet losses. Repeating this packet leads to a significant delay, before the message is received. Even when employing channel sensing strategies a large and unpredictable delay may occur until the device can transmit.
International patent application publication WO2013/135904 describes a method for performing connection management in a mobile communication network. A user terminal within the network informs a base station that no data transmission from the user terminal to that base station is expected within a certain time interval *Tₑₓₚ.*
European patent application publication EP0892571A1 relates to a method for allocating time to a mobile station. A mobile station can request idle time from a network. The network checks whether suitable idle time is coming up and if not, allocates idle time according to the request. Any occurrence of the term "embodiment" in the description has to be considered as an "aspect of the invention", the invention being defined only in the appended independent claims.

### SUMMARY OF THE INVENTION

It is an object of the invention to provide a wireless access scheme addressing the above mentioned problems.

According to one embodiment of the invention, a method for managing radio resources by a User Equipment is proposed. A control signal indicating a subset of radio resources which are radio resources reserved for the User Equipment for dedicated applications is received from a base station. The base station assigns these resources to one User Equipment or a group of User Equipments. The User Equipment running dedicated applications determines if the dedicated applications will need the reserved radio resources during a certain forthcoming time period. The duration of the forthcoming time period depends on the predictability of the applications. If reserved radio resources will not be used during a certain forthcoming time period, the User Equipment sends a release signal for the radio resources. Such release signal is received by the base station and processed accordingly. This has the advantage that a pre-reservation scheme is used for communication providing low latencies and high reliability. In cases the User Equipment does not need the resources, they are released and can be assigned to other User Equipments to enhance spectral efficiency. The decision about releasing radio resources is made by the User Equipment, thus overhead is reduced and in critical cases, the radio resources stay reserved to the User Equipment without any additional overhead.

According to one embodiment, the release signal is a signal sent to a base station on a control channel. According to one embodiment, the release signal is a signal sent to a base station on the pre-reserved data channel.

According to one embodiment, the radio resources reserved for the User Equipment are pre-reserved radio resources for certain devices running said dedicated application. The radio resources must not be used by other devices or other applications upon explicit release by the device. Thus, this ensures the same level of reliability and low latency as in cases where radio resources are permanently assigned to a device. Only if the device determines that the assignment of radio resources is not necessary, the radio resources are used otherwise.

According to one embodiment, the release signal includes information about the duration for which the radio resource is released. The User Equipment releasing its radio resources or parts thereof determines how long the radio resources will not be needed. Thus, the User Equipment releases the radio resources according to its needs and ensures that radio resources are available when they are probably needed.

According to one embodiment, the User Equipment sends a release interrupt signal indicating that the release of the pre-reserved radio resource is withdrawn. The User Equipment is enabled to call for the previously released radio resources if situation changed and the radio resources are needed. Thus, flexibility is still high but in this case with additional latency for signaling the release interrupt signal. In addition, the radio resources can only be reassigned to the User Equipment if not assigned to other devices in the meantime. If the radio resources are reassigned to other devices in the meantime, the base station needs to manage how the User Equipment is provided with sufficient radio resources.

According to one embodiment, a User Equipment in a wireless network for managing radio resources is proposed. The User Equipment comprises a receiver for receiving a control signal indicating a subset of radio resources which are radio resources reserved for the User Equipment for dedicated applications. The User Equipment further comprises a resource management means for determining if the dedicated applications will need reserved radio resources during a certain forthcoming time period. The User Equipment further comprises a transmitter for sending a release signal for the radio resources if such reserved radio resources will not be used during a certain forthcoming time.

According to one embodiment, the resource management means is further for withdrawing the release of a radio resource. The transmitter is further for sending a release interrupt signal. If the User Equipment discovers that the previously released radio resource is needed for data transmission, a release interrupt signal is sent to the base station. The base station then decides if the previously released radio resource is reassigned to the User Equipment, e.g. because the radio resource has not been assigned to another device or if the User Equipment is provided with other radio resources.

According to one embodiment, the release signal is encoded to include a release time. After expiration of the release time, the radio resources are reassigned to the User Equipment.

According to one embodiment, a base station in a wireless network for managing radio resources is proposed. The base station comprises a resource management means for determining radio resources which are reserved for a dedicated application for at least one User Equipment. The base station further comprises a transmitter for sending a control signal indicating the radio resources which are radio resources as determined by the resource management means. The base station further comprises a receiver for receiving a release signal indicating that the radio resources will not be used by a certain User Equipment.

According to one embodiment, the resource management means is for assigning the released radio resource to another application or another User Equipment.

According to one embodiment, the receiver is further for receiving a release interrupt signal indicating that the pre-released radio resources are required by the User Equipment. The resource management means is for re-reserving the radio resources for the User Equipment if the radio resource is not already assigned otherwise.

According to one embodiment, the release signal is encoded to include a release time. After expiration of the release time, the radio resources are reassigned to the User Equipment. Thus, the base station can only assign the radio resource to other devices by considering the release time and the point in time when the radio resources need to be reassigned to the User Equipment.

According to one embodiment, the transmitter of the base station is further for sending a control signal informing the User Equipment that the release radio resource is assigned to another application or another User Equipment.

Further advantageous features of the embodiments of the invention are defined and are described in the following detailed description.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: shows a flow diagram for releasing pre-reserved radio resources
- Fig. 2: depicts a time-frequency radio resource diagram according to a first embodiment of the invention
- Fig. 3: depicts a time-frequency radio resource diagram according to a second embodiment of the invention
- Fig. 4: depicts a time-frequency radio resource diagram according to a third embodiment of the invention
- Fig. 5: depicts a time-frequency radio resource diagram according to a fourth embodiment of the invention

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions.

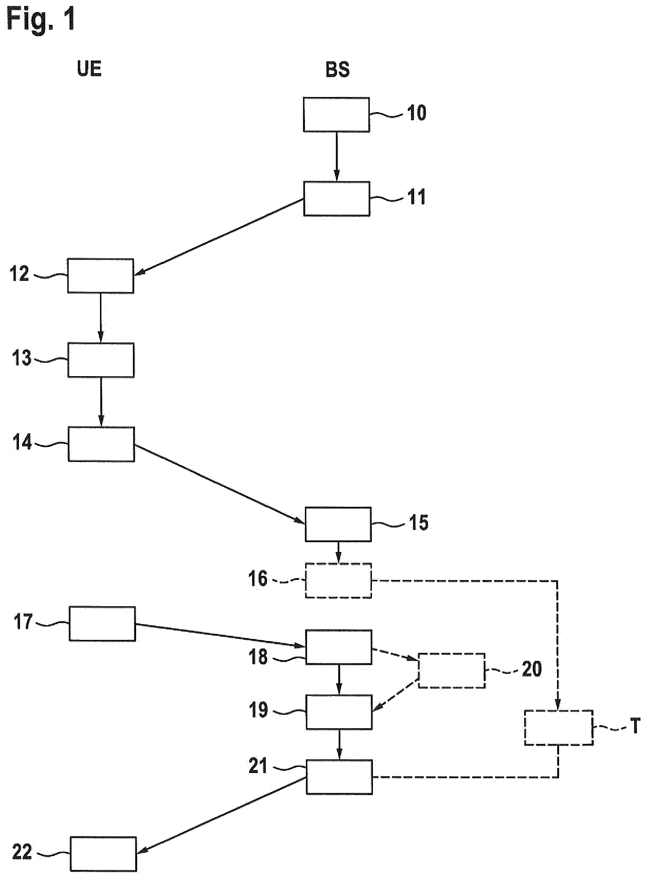

Fig. 1 discloses a scheme of managing radio resources and interaction between a base station and a User Equipment. On the left hand side, steps taken in the User Equipment are disclosed. Only one User Equipment is referred to, nevertheless it is clear to someone skilled in the art that multiple User Equipment are in the coverage area of a base station and perform corresponding steps independently from each other. The steps performed in the base station are disclosed on the right hand side of Fig. 1. In step 10, a resource management means of the base station determines radio resources which are reserved for a dedicated User Equipment or a group of User Equipments for dedicated applications, e.g. applications which require high reliability and low latency like car-to-car, car-to-infrastructure, industrial automation and processing. These applications are mission critical. In step 11, a transmitter of the base station sends a control signal to at least one User Equipment informing it about the radio resources which are reserved for the User Equipment for a dedicated application. In step 12, the User Equipment receives the control signal indicating the radio resources which are reserved for dedicated applications for the User Equipment. In one embodiment, each User Equipment has own reserved radio resources for dedicated applications which need not be shared with other applications. In one embodiment, a group of User Equipments have common reserved radio resources for dedicated applications which are reserved for this group of User Equipments. The group of User Equipment consists of a small number of User Equipments such that the probability of collisions when accessing the radio resources is low. According to one embodiment, the reservation of reserved radio resources described in above steps 10 - 12 is made at the setup of the system. According to one embodiment, the reservation of radio resources is done repeatedly. According to one embodiment, the reservation of radio resources is preconfigured, making the above steps 10 -12 obsolete. In step 13, the User Equipment determines that the dedicated application run in the User Equipment will not make use of the reserved radio resources in a certain forthcoming time interval. Thus, the user equipment realizes that it will not need the reserved radio resources. In step 14, the User Equipment sends a release signal for the radio resources. In one embodiment, the release signal is sent on a control channel. In one embodiment, the release signal is sent on a pre-reserved data channel, thus on the pre-reserved subcarrier itself. In step 15, the release signal is received in the base station. The resource management system is aware of the fact that the released radio resources are available to be assigned to another User Equipment or another application. In addition, in one embodiment, the release signal received in step 15 includes a release time indicating how long the radio resource is not required by the User Equipment. Thus, the resource management system of the base station assigns in step 16 the released radio resource to another User Equipment or another application during this time, if radio resources are needed. After the release time has expired, a signal is sent by the base station in step 21, indicating that the released radio resource is now available and reserved again for the User Equipment. This signal is received by the User Equipment in step 22. According to one embodiment, informing the User Equipment that the release time has expired and the radio resource is again available for the User Equipment is optional. If during the release time, the User Equipment discovers that the User Equipment needs the radio resources for its own operation, the User Equipment sends a release interrupt signal to the base station in step 17. In step 18, the base station receives the release interrupt signal. If the released radio resource was not assigned to another device in the meantime, the base station reassigns the radio resource to the User Equipment in step 19 and informs the User Equipment that the released radio resource is now available and reserved again for the User Equipment in step 21. The User Equipment receives this information in step 22. If the released radio resource was assigned to another device in the meantime, the base station informs the other device in step 20 that the radio resource needs to be released. After the radio resource is available again, the radio resource is reassigned to the User Equipment in step 19 and the base station informs the User Equipment in step 21 that the released radio resource is now available and reserved again for the User Equipment. This information is received by the User Equipment in step 22. According to the above method, the low and bounded communication latency of medium access control schemes based on a pre-reservation of wireless channel resources is realized. At the same time, waste of expensive channel resources is avoided by releasing unused resources to other devices. Consequently, a high spectral efficiency and at the same time low latencies are realizable.

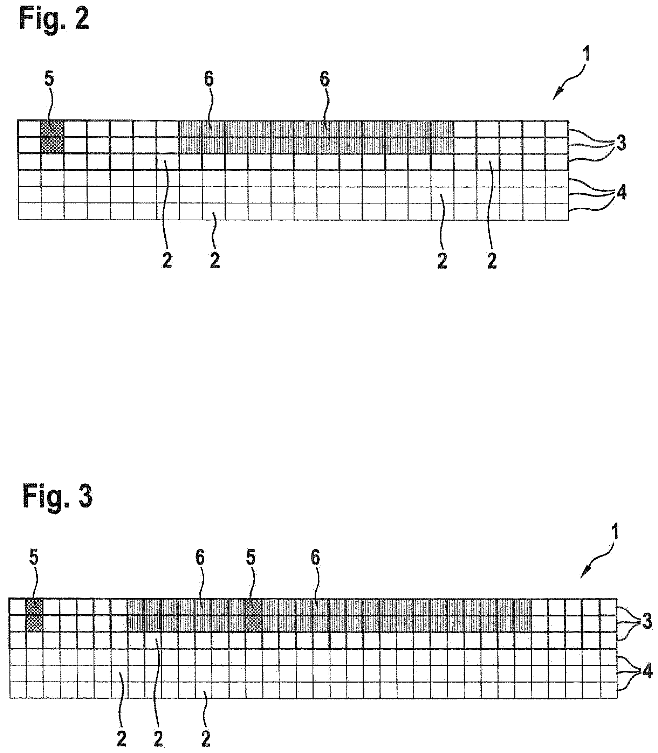

Fig. 2 discloses time-frequency radio resources 1 in a wireless communication system. In one embodiment, Fig. 2 represents uplink resources of an LTE-like multi carrier system or 5G system. The signal is e.g. an uplink signal of a multi-carrier wireless system, e.g. an LTE system or 5G wireless system. Radio resource blocks 2 are arranged as frequency subcarriers 3, 4 (vertical axis) over time (horizontal axis). Each symbol is represented by a small box. The first three subcarriers 3 are pre-reserved wireless channel resources for at least one User Equipment for a certain application, e.g. a mission critical application requiring low latency and high reliability. The User Equipment is e.g. a Machine-to-Machine communication device for car-to-car, car-to-infrastructure, industrial automation and processing applications. The other subcarriers 4 are subcarriers which are used otherwise. As the figure is only for illustrative purposes, a person skilled in the art is aware that the pre-reserved subcarriers 3 are a subset of all subcarriers 3, 4. In general, the pre-reserved subcarriers 3 are a low number of subcarriers and not half of all available subcarriers as depicted. For the first two pre-reserved subcarriers 3 a release signal 5 is available in the second radio resource. The release signal 5 indicates that the User Equipment will not need the pre-reserved resource for a certain time period as described above. In this example, two pre-reserved subcarriers 3 are released for 12 resource blocks 6. Generally, it is possible to release all pre-reserved subcarriers or only some of them. Between the release signal 5 and the released resource blocks 6, a delay of a few resource blocks is present due to control messages, e.g. ACKs, propagation delay and processing delay. The time period for which it is indicated that the pre-reserved radio resources are not needed considers the delay for control messages. Sending the release signal on the pre-reserved subcarrier 3 has the advantage that it is efficient, because it is implicitly clear which sub-carriers are released. An explicit mapping between the identity of the device transmitting the release signal and the sub-carriers is not required due to the existing pre-reservation. Avoiding the transmission of explicit mapping data saves signaling overhead and increases reliability as mapping errors are omitted. In one embodiment, the release signal 5 is defined as a specific unique bit pattern that is mapped on the pre-reserved subcarriers 3 and on the time symbols (e.g. OFDM symbols or Universal Filtered Multi-Carrier - UFMC symbols), i.e. resource blocks 2. As described above, the release signal 5 includes information on how long the release is valid, e.g. a number of time symbols or radio frames. In one embodiment, arbitrary release duration is explicitly added in a coded format to the release signal 5. In one embodiment, different unique bit pattern are used as release signals 5, each one representing a certain specified duration for the release of the radio resources. The base station decodes the release duration information and may allocate the released uplink sub-carriers during this period to any other device.

Fig. 3 shows a similar arrangement of uplink radio resources as Fig. 2. In Fig. 3, a second release signal 5 is sent if it is determined that the release duration expires and the radio resource is further not needed. The second release signal 5 is send such that the released resource blocks 6 are arranged consecutively.

In one embodiment, the base station sends an acknowledgement after it received the release signal 5. In one embodiment, the acknowledgement is omitted as the grant of the released resources to other devices implicitly acknowledges the release. In one embodiment, the release signal 5 is not sent via the pre-reserved subcarrier but e.g. on an uplink control channel. In this case, the release signal includes additionally either the device identity or an index of the pre-reserved subcarriers which is released. In both cases, the base station is able to identify the released subcarriers with the corresponding information.

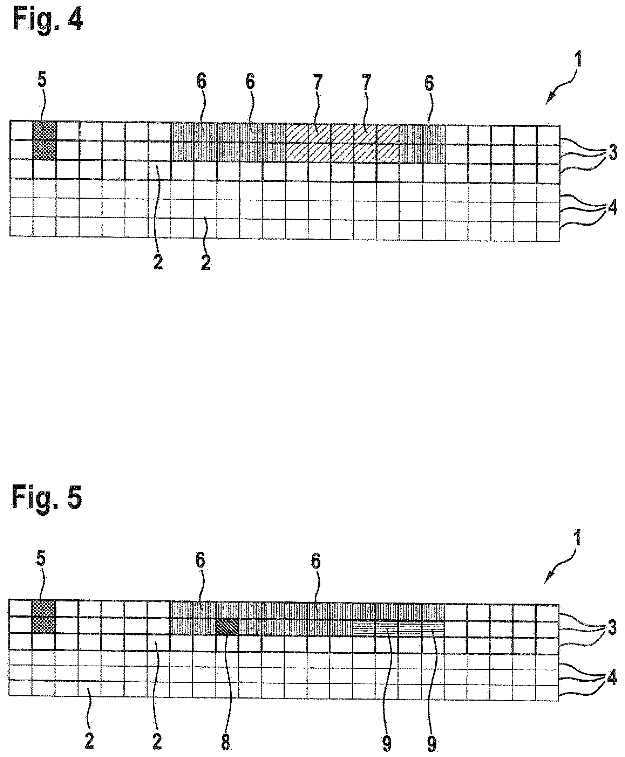

In one embodiment according to Fig. 4, the base station informs the User Equipment about allocation of its pre-reserved subcarriers to another device. In the case that the base station allocates the released radio resources 6 to another device, a control message carrying this information is sent to the User Equipment obtaining the original pre-reservation. This information consists of the relative or absolute indices of the newly allocated radio resources 7 in time and frequency, e.g., OFDM or UFMC symbols and subcarriers. Once the User Equipment with the original pre-reservation received this information, it is aware which radio resources 7 are allocated to another device and which released radio resources 6 are still unused. In one embodiment, the allocation of the radio resources 7 to another device is initiated after the base station has received an acknowledgement from the releasing User Equipment.

Fig. 5 depicts an interrupt for the release of a pre-reserved subcarrier. The User Equipment which has released a pre-reserved subcarrier can terminate or interrupt the release of these radio resources 9 prior to the expiration of the release duration.

A release interrupt signal 8 is transmitted. This release interrupt signal 8 is sent on the pre-reserved (and released) subcarriers if the base station has not already allocated these resources to another device. The release interrupt signal 8 consists of a pre-defined bit pattern that allows the base station to decode the release interrupt signal 8 and implicitly the identity of the device. In one embodiment, the release interrupt signal 8 is sent on other uplink radio resources, e.g. on an uplink control channel. In this case, a device identifier is added to the release interrupt signal 8. In one embodiment, the release interrupt signal 8 addresses only a sub-set of the released radio resources 6 in time and frequency, e.g. one single subcarrier. In one embodiment, the release interrupt signal 8 addresses all released radio resources until the end of the release duration. In one embodiment, these different options are distinguished by specifying different bit patterns for the release interrupt signal 8. In one embodiment, radio resources that are already allocated to other devices by the base station are excluded from the release interruption or termination. In one embodiment, radio resources that are already allocated to other devices by the base station are reallocated to the User Equipment in response of a release interrupt signal 8 after grant of the radio resources to other devices is released. In one embodiment, the base station sends an acknowledgement after having received the release interrupt signal 8.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for managing radio resources by a User Equipment, comprising the steps of:
- receiving a control signal indicating a subset of radio resources which are radio resources reserved for the User Equipment for dedicated applications,
- determining if the dedicated applications will need the reserved radio resources during a certain forthcoming time period, and
if such reserved radio resources will not be used during a certain forthcoming time period, sending a release signal for the reserved radio resources, **characterized in that** the release signal is sent on at least one of the reserved resources.

2. Method for managing radio resources according to claim 1, wherein the radio resources reserved for the User Equipment are pre-reserved radio resources for certain devices running said dedicated application and must not be used by other devices or other applications upon explicit release by the User Equipment.

3. Method for managing radio resources according to claim 1 or claim 2, wherein the release signal includes information about the duration for which the radio resource is released.

4. Method for managing radio resources according to any one of the preceding claims, further comprising defining the release signal by mapping a specific unique bit pattern on the one or more reserved radio resources.

5. Method for managing radio resources according to claim 4, wherein different unique bit patterns represent a different specified duration for the release fo the respective one of the one or more reserved radio resources.

6. Method for managing radio resources according to one of claims 1 to 5, the method further comprising the step:
- sending a release interrupt signal indicating that the release of the pre-reserved radio resource is withdrawn.

7. User Equipment in a wireless network for managing radio resources, comprising:
- a receiver for receiving a control signal indicating a subset of radio resources which are radio resources reserved for the User Equipment for dedicated applications,
- a resource management means for determining if the dedicated applications will need reserved radio resources during a certain forthcoming time period, and
- a transmitter for sending a release signal for the reserved radio resources if such reserved radio resources will not be used during a certain forthcoming time,
**characterized in that** the transmitter is configured to send the release signal on at least one of the reserved radio resources.

8. User Equipment for managing radio resources according to claim 7, wherein the resource management means is further for withdrawing the release of a radio resource, and
the transmitter is further for sending a release interrupt signal.

9. User Equipment for managing radio resources according to claim 7 or 8, wherein the release signal is encoded to include a release time.

10. Base station in a wireless network for managing radio resources, comprising:
- a resource management means for determining radio resources which are reserved for dedicated applications for a User Equipment,
- a transmitter for sending a control signal indicating the radio resources which are radio resources as determined by the resource management means,
- a receiver for receiving a release signal indicating that the radio resources will not be used by the User Equipment, **characterized in that** the receiver is configured to receive the release signal on at least one of the reserved radio resources.

11. Base station for managing radio resources according to claim 10, wherein the resource management means is for assigning the released radio resources to another application or another User Equipment.

12. Base station for managing radio resources according to claim 10 or 11, wherein the receiver is further for receiving a release interrupt signal indicating that the pre-released radio resources are required by the User Equipment, and
the resource management means is for re-reserve the radio resources for the User Equipment if the radio resources are not already assigned otherwise.

13. Base station for managing radio resources according to one of claims 10 to 12, wherein the release signal is encoded to include a release time, and wherein the base station is further configured to decode the release signal.

14. Base station for managing radio resources according to one of claims 11 to 12, wherein the transmitter is further for sending a control signal informing the User Equipment that the released radio resources are assigned to another application or another User Equipment.

15. Communication system comprising a User Equipment according to any one of claims 7-9 and a base station according to any one of claims 10-14.

## Patentansprüche

1. Verfahren zum Verwalten von Funkressourcen durch ein Teilnehmergerät, umfassend die folgenden Schritte:
- Empfangen eines Kontrollsignals, das eine Untermenge von Funkressourcen anzeigt, welche Funkressourcen sind, die für das Teilnehmergerät für dedizierte Anwendungen reserviert sind,
- Bestimmen, ob die dedizierten Anwendungen die reservierten Funkressourcen während eines bestimmten bevorstehenden Zeitraums benötigen werden, und,
wenn solche reservierten Funkressourcen nicht verwendet werden während eines bestimmten bevorstehenden Zeitraums, Senden eines Freigabesignals für die reservierten Funkressourcen, **dadurch gekennzeichnet, dass** das Freigabesignal für mindestens eine der reservierten Ressourcen gesendet wird.

2. Verfahren zum Verwalten von Funkressourcen nach Anspruch 1, wobei die für das Teilnehmergerät reservierten Funkressourcen vorab reservierte Funkressourcen für bestimmte Geräte sind, die besagte dedizierte Anwendung betreiben und nicht von anderen Geräten oder anderen Anwendungen nach ausdrücklicher Freigabe durch das Teilnehmergerät benutzt werden dürfen.

3. Verfahren zum Verwalten von Funkressourcen nach Anspruch 1 oder Anspruch 2, wobei das Freigabesignal Information einschließt über die Dauer, für die die Funkressource freigegeben wird.

4. Verfahren zum Verwalten von Funkressourcen nach einem beliebigen der vorhergehenden Ansprüche, weiterhin umfassend das Definieren des Freigabesignals durch Abbilden eines spezifischen eindeutigen Bit-Musters auf die eine oder die mehreren reservierten Funkressourcen.

5. Verfahren zum Verwalten von Funkressourcen nach Anspruch 4, wobei verschiedene eindeutige Bit-Muster eine unterschiedliche spezifizierte Dauer für die Freigabe der entsprechenden der einen oder der mehreren reservierten Funkressourcen darstellen.

6. Verfahren zum Verwalten von Funkressourcen nach einem der Ansprüche 1 bis 5, wobei das Verfahren weiterhin den folgenden Schritt umfasst:
- Senden eines Freigabeunterbrechungssignals, das anzeigt, dass die Freigabe der vorab reservierten Funkressource zurückgezogen worden ist.

7. Teilnehmergerät in einem drahtlosen Netzwerk zum Verwalten von Funkressourcen, umfassend:
- einen Empfänger zum Empfangen eines Kontrollsignals, das eine Untermenge von Funkressourcen anzeigt, die Funkressourcen sind, die für das Teilnehmergerät für dedizierte Anwendungen reserviert sind,
- ein Ressourcenverwaltungsmittel zum Bestimmen, ob die dedizierten Anwendungen reservierte Funkressourcen während eines bestimmten bevorstehenden Zeitraums benötigen, und
- einen Sender zum Senden eines Freigabesignals für die reservierten Funkressourcen, wenn solche reservierten Funkressourcen während eines bestimmten bevorstehenden Zeitraums nicht benutzt werden,
**dadurch gekennzeichnet, dass** der Sender konfiguriert ist zum Senden des Freigabesignals für mindestens eine der reservierten Funkressourcen.

8. Teilnehmergerät zum Verwalten von Funkressourcen nach Anspruch 7, wobei die Ressourcenverwaltung weiterhin dient zum Zurückziehen der Freigabe einer Funkressource und der Sender weiterhin dient zum Senden eines Freigabeunterbrechungssignals.

9. Teilnehmergerät zum Verwalten von Funkressourcen nach Anspruch 7 oder 8, wobei das Freigabesignal codiert ist, um eine Freigabezeit einzuschließen.

10. Basisstation in einem drahtlosen Netzwerk zum Verwalten von Funkressourcen, umfassend:
- ein Ressourcenverwaltungsmittel zum Bestimmen von Radioressourcen, die reserviert sind für dedizierte Anwendungen für ein Teilnehmergerät,
- einen Sender zum Senden eines Kontrollsignals, das die Funkressourcen anzeigt, die Funkressourcen sind wie von dem Ressourcenverwaltungsmittel bestimmt,
- einen Empfänger zum Empfangen eines Freigabesignals, das anzeigt, dass die Funkressourcen nicht von dem Teilnehmergerät benutzt werden, **dadurch gekennzeichnet, dass** der Empfänger konfiguriert ist zum Empfangen des Freigabesignals für mindestens eine der reservierten Funkressourcen.

11. Basisstation zum Verwalten von Funkressourcen nach Anspruch 10, wobei das Ressourcenverwaltungsmittel zum Zuweisen der freigegebenen Funkressourcen zu einer anderen Anwendung oder zu einem anderen Teilnehmergerät dient.

12. Basisstation zum Verwalten von Funkressourcen nach Anspruch 10 oder 11, wobei der Empfänger weiterhin dient zum Empfangen eines Freigabeunterbrechungssignals, dass die vorab freigegebenen Funkressourcen von dem Teilnehmergerät benötigt werden, und das Ressourcenverwaltungsmittel zum erneuten Reservieren der Funkressourcen für das Teilnehmergerät dient, wenn die Funkressourcen nicht schon anderweitig zugewiesen worden sind.

13. Basisstation zum Verwalten von Funkressourcen nach einem der Ansprüche 10 bis 12, wobei das Freigabesignal codiert ist zum Einschließen einer Freigabezeit und wobei die Basisstation weiterhin konfiguriert ist zum Decodieren des Freigabesignals.

14. Basisstation zum Verwalten von Funkressourcen nach einem der Ansprüche 11 bis 12, wobei der Sender weiterhin dient zum Senden eines Kontrollsignals, das das Teilnehmergerät informiert, dass die freigegebenen Funkressourcen einer anderen Anwendung oder einem anderen Teilnehmergerät zugewiesen worden sind.

15. Kommunikationssystem, umfassend ein Teilnehmergerät nach einem beliebigen der Ansprüche 7-9 und eine Basisstation nach einem beliebigen der Ansprüche 10-14.

## Revendications

1. Procédé de gestion de ressources radio par un équipement utilisateur, comprenant les étapes suivantes :
- recevoir un signal de commande indiquant un sous-ensemble de ressources radio qui sont des ressources radio réservées à l'équipement utilisateur pour des applications dédiées,
- déterminer si les applications dédiées auront besoin des ressources radio réservées durant une certaine période ultérieure, et
si de telles ressources radio réservées ne seront pas utilisées durant une certaine période ultérieure, envoyer un signal de libération pour les ressources radio réservées, **caractérisé en ce que** le signal de libération est envoyé sur au moins une des ressources réservées.

2. Procédé de gestion de ressources radio selon la revendication 1, dans lequel les ressources radio réservées à l'équipement utilisateur sont des ressources radio préréservées pour certains dispositifs exécutant ladite application dédiée et ne doivent pas être utilisées par d'autres dispositifs ou d'autres applications lors d'une libération explicite par l'équipement utilisateur.

3. Procédé de gestion de ressources radio selon la revendication 1 ou la revendication 2, dans lequel le signal de libération comprend des informations sur la durée pendant laquelle la ressource radio est libérée.

4. Procédé de gestion de ressources radio selon l'une quelconque des revendications précédentes, comprenant en outre la définition du signal de libération en mettant en correspondance une configuration binaire unique spécifique sur la ou les ressources radio réservées.

5. Procédé de gestion de ressources radio selon la revendication 4, dans lequel différentes configurations binaires uniques représentent une durée spécifique différente pour la libération de la ressource radio respective parmi la ou les ressources radio réservées.

6. Procédé de gestion de ressources radio selon l'une des revendications 1 à 5, le procédé comprenant en outre l'étape suivante :
- envoyer un signal d'interruption de libération indiquant que la libération de la ressource radio pré-réservée est annulée.

7. Équipement utilisateur dans un réseau sans fil pour gérer des ressources radio, comprenant :
- un récepteur pour recevoir un signal de commande indiquant un sous-ensemble de ressources radio qui sont des ressources radio réservées à l'équipement utilisateur pour des applications dédiées,
- des moyens de gestion de ressources pour déterminer si les applications dédiées auront besoin de ressources radio réservées durant une certaine période ultérieure, et
- un émetteur pour envoyer un signal de libération pour les ressources radio réservées si de telles ressources radio réservées ne seront pas utilisées durant une certaine période ultérieure,
**caractérisé en ce que** l'émetteur est configuré pour envoyer le signal de libération sur au moins une des ressources radio réservées.

8. Équipement utilisateur pour gérer des ressources radio selon la revendication 7, dans lequel les moyens de gestion de ressources sont en outre destinés à annuler la libération d'une ressource radio, et l'émetteur est en outre destiné à envoyer un signal d'interruption de libération.

9. Équipement utilisateur pour gérer des ressources radio selon la revendication 7 ou 8, dans lequel le signal de libération est codé pour inclure un temps de libération.

10. Station de base dans un réseau sans fil pour gérer des ressources radio, comprenant :
- des moyens de gestion de ressources pour déterminer des ressources radio qui sont réservées pour des applications dédiées à un équipement utilisateur,
- un émetteur pour envoyer un signal de commande indiquant les ressources radio qui sont des ressources radio telles que déterminées par les moyens de gestion de ressources,
- un récepteur pour recevoir un signal de libération indiquant que les ressources radio ne seront pas utilisées par l'équipement utilisateur, **caractérisée en ce que** le récepteur est configuré pour recevoir le signal de libération sur au moins une des ressources radio réservées.

11. Station de base pour gérer des ressources radio selon la revendication 10, dans laquelle les moyens de gestion de ressources sont destinés à attribuer les ressources radio libérées à une autre application ou un autre équipement utilisateur.

12. Station de base pour gérer des ressources radio selon la revendication 10 ou 11, dans laquelle le récepteur est en outre destiné à recevoir un signal d'interruption de libération indiquant que les ressources radio pré-libérées sont requises par l'équipement utilisateur, et les moyens de gestion de ressources sont destinés à réserver à nouveau les ressources radio à l'équipement utilisateur si les ressources radio ne sont pas déjà attribuées par ailleurs.

13. Station de base pour gérer des ressources radio selon l'une des revendications 10 à 12, dans laquelle le signal de libération est codé pour inclure un temps de libération, et la station de base étant en outre configurée pour décoder le signal de libération.

14. Station de base pour gérer des ressources radio selon l'une des revendications 11 à 12, dans laquelle l'émetteur est en outre destiné à envoyer un signal de commande informant l'équipement utilisateur que les ressources radio libérées sont attribuées à une autre application ou un autre équipement utilisateur.

15. Système de communication comprenant un équipement utilisateur selon l'une quelconque des revendications 7 à 9 et une station de base selon l'une quelconque des revendications 10 à 14.
